# EUROPEAN PATENT SPECIFICATION

(11) **EP 0 631 734 B1**
(45) Date of publication and mention of the grant of the patent: **21.10.1998**
(21) Application number: 94304743.1
(22) Date of filing: 29.06.1994
(51) Int. Cl.: A23N 17/00

(54) **Method and apparatus for hay soaking**
Verfahren und Vorrichtung zum Weichen von Heu
Méthode et appareil pour le trempage de foin

(30) Priority: 30.06.1993 GB 9313473
(43) Date of publication of application: 04.01.1995
(73) Proprietor: Bell, Dennis Kilby, Milton Malsor, Northampton NN7 3AT (GB); Bell, Gregory James, Milton Malsor, Northampton NN7 3AT (GB)
(72) Inventor: Bell, Dennis Kilby, Milton Malsor, Northampton NN7 3AT (GB); Bell, Gregory James, Milton Malsor, Northampton NN7 3AT (GB)
(74) Representative: Raynor, Simon Mark

(56) References cited:
- DE-A- 3 505 067
- FR-A- 342 949
- FR-A- 2 086 733
- GB-A- 2 250 673

## Description

This invention relates to a method and apparatus for hay soaking.

The invention may also find application to other related techniques in which a mass or body of crop or the like material is treated with liquid, and thereby is rendered relatively heavy and requires subsequent handling.

Hay soaking is not a new technique. Whilst it is known to soak hay in tanks, most systems use lifting gear to place the hay into and out of a tank (GB 2 238 036 and DE 3 909 850 and DE 3 505 067). There is disclosed in GB 2 250 673 a stationary tank having a hinged screen which is revolved to place hay on it into the tank and to pick up and drain hay resting in the tank, according to the preambles of claims 1 and 5.

In the case of hay soaking, a body of hay, such as hay in a hay net, or a bale of hay is treated with water in order to produce several effects including reduction of the amount of dust in the hay, which can cause horses consuming the hay to cough. Likewise, the treatment also is carried out in order to, effectively, wash the hay so as to reduce the presence of bacteria and spores. The washing is usually carried out with plain water, but of course additional materials may be included in the water if so desired in order to increase the effect of the treatment on bacteria or spores or otherwise.

A problem that arises in relation to hay soaking is that, after soaking, the body of hay is much heavier than before. This leads to lifting problems. Back injuries can be caused to personnel. At the very least, the increase in weight causes delays in the handling of the soaked hay.

Prior proposals in this regard, as indicated above, include the provision of traditional lifting gear for the soaked hay, for example in the form such as might be used for lifting or hoisting the engine from a car during repair operations. Another prior proposal which may have been made includes the provision in a hay soaking tank of means for lifting the soaked hay out of the tank so that it can then be handled.

An object of the present invention is to provide a method and apparatus offering improvements in relation to the handling of soaked hay and/or in the soaking process itself and/or in the separation of the soaked hay from the soaking fluid and/or in relation to one or more other matters discussed herein, or generally.

In accordance with the invention there is provided apparatus adapted for use in soaking hay and a method of soaking hay as defined in the accompanying claims.

According to the invention there is provided apparatus and a corresponding method wherein inter alia a hay retaining member is mounted in relation to a hay-soaking tank and is positionable in relation thereto so as to be capable of holding a body of hay or the like more fully immersed in the treatment fluid than would otherwise be the case. In this way, the advantage is provided that relatively simple apparatus is capable of effecting a hay soaking operation in a convenient manner and without requiring supervision.

In an embodiment, means is provided to enable at least some of the treatment fluid to be discharged before removal of the hay from the tank. In this way the advantage is provided that the mass of the tank and its contents is greatly reduced, in an extremly simple manner, so that the technique of removal of the hay from the tank as disclosed below can be employed.

In the described embodiment, the tank is likewise provided with means for filling same with water or other treatment fluid, and the same port into the tank is employed for both filling the tank and for discharging fluid therefrom. Appropriate flow control valve means is provided.

Likewise in the embodiment, the means for discharging at least some of the treatment fluid from the tank before removal of the hay therefrom comprises means for tipping the tank. In this way, the advantage is provided that at least some of the fluid may be rapidly discharged in this way. Likewise, this facility provides a means to enable the draining of the soaked hay, since the latter is retained in relation to the tank by the hay retaining member.

According to the invention, means is provided to enable removal of the hay from the tank, and this facility is provided likewise by means of the tipping arrangement for the tank. For this purpose, the hay-retaining member is arranged to be removable or indeed movable to a non-retaining position. The hay-retaining member may be in the form of a grid or may be formed from a mesh material or the like.

Thus, in accordance with the embodiments of the invention, means is provided to enable a tank or chamber in which a body of hay is to be soaked to retain the hay in proper soaking relationship to a body of treatment fluid. Likewise, means is provided and a corresponding method step whereby the tank or chamber in which the body of hay has been soaked, can be drained, after which the hay can be tipped from the chamber or tank. Drainage may be complete or partial, and the tipping operation may be accomplished by tipping all or part of the tank or chamber.

By providing means for enabling the soaked body of hay to be tipped from its soaking location, the need for significant lifting of the soaked body of hay is thereby reduced or eliminated.

In an embodiment, the location of the pivot axis for the soaking tank is positioned in relation to the centre or gravity of the tank so that the tank is readily tipped from its hay-soaking position. For this purpose, the pivot axis may be located below the centre of gravity of the tank, when filled for hay soaking purposes. A releasable catch device is provided to retain the tank in its hay-soaking attitude.

Embodiments of the invention will now be described by way of example and with reference to the accompanying drawings in which:-
FIGURE 1 shows a perspective view of a hay soaking tank in its upright hay-receiving attitude;
FIGURE 2 shows an exploded view of the tank-mounting components of the apparatus of Figure 1;
FIGURE 3 shows a perspective view of the tank of Figure 1 with a more detailed showing of the tank draining and filling facility and there is shown alongside the tank a perspective view of a generally channel-section strainer member;
FIGURE 4 shows a perspective view of a hay-retaining grid member and an associated wedge for mounting purposes;
FIGURE 5 shows the apparatus of Figure 1 to 4 in use;
FIGURE 6 shows the apparatus of Figure 5 in a tank-tipped condition;
FIGURE 7 shows the apparatus of Figures 5 and 6 in a tipped condition with one or two soaked bales in a discharged position on an assembly of receiving slats;
FIGURE 8 shows a further embodiment with alternative apparatus for securing the hay-retaining members; and
FIGURE 9 shows the embodiment of Figure 8 with detailed illustration in Figures 9A and 9B of locking or latching apparatus for retaining the tank in its non-tipped condition.

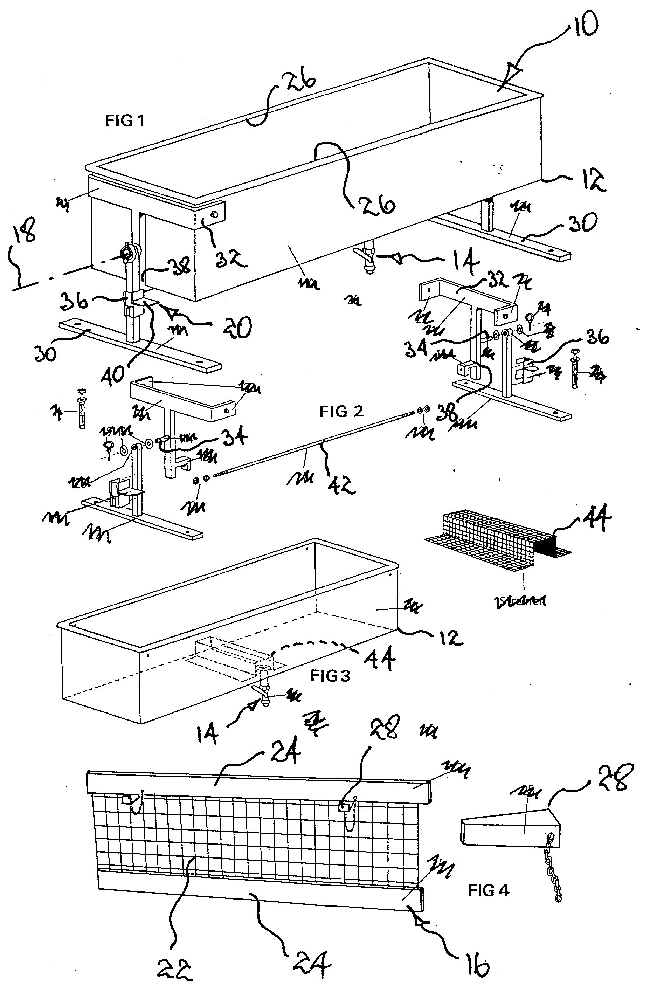

As shown in Figure 1, hay-soaking apparatus 10 comprises a tank 12 to receive a body of hay. Tank 12 is adapted to receive water to effect soaking through a combined filler and drain cock 14.

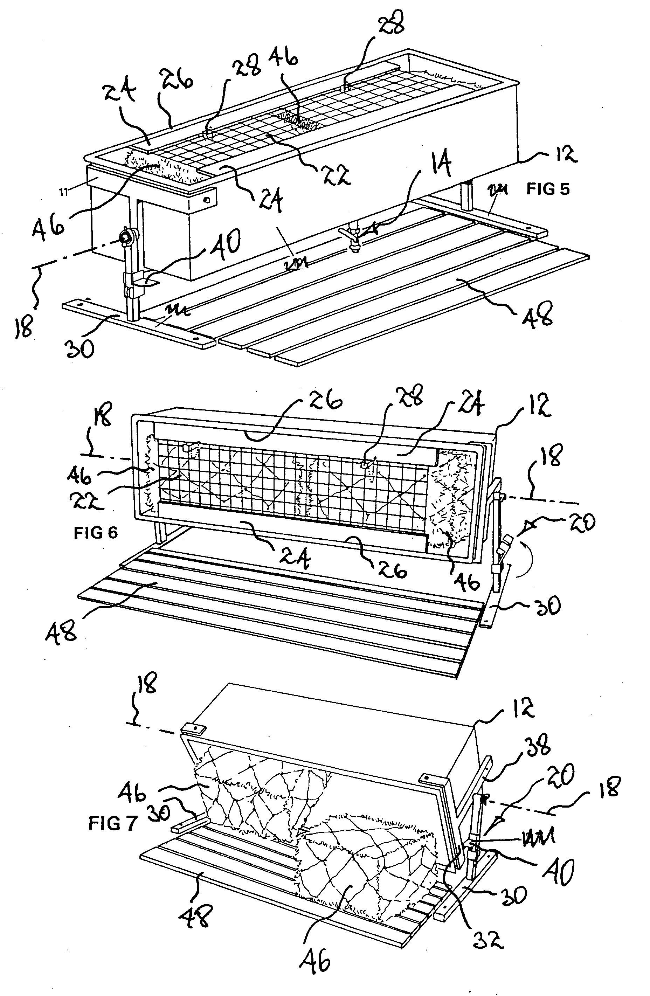

As shown in Figure 4, a hay retaining member 16 is provided and adapted to be mounted in relation to tank 12 so as to be capable of holding a body of hay generally fully immersed in the water contained in tank 12, as illustrated in Figure 5.

Drain cock 14 constitutes means to discharge at least some of the water in tank 12 before removing hay from the tank. For this same purpose, tank 12 is likewise adapted to be mounted so as to be capable of tipping about a tipping axis 18. Axis 18 is located slightly below the location of the centre of gravity of tank 12 so as to facilitate tipping when required. Prior to tipping, tank 12 is retained in its upright attitude shown in Figure 1 by a releasable latch or locking assembly 20.

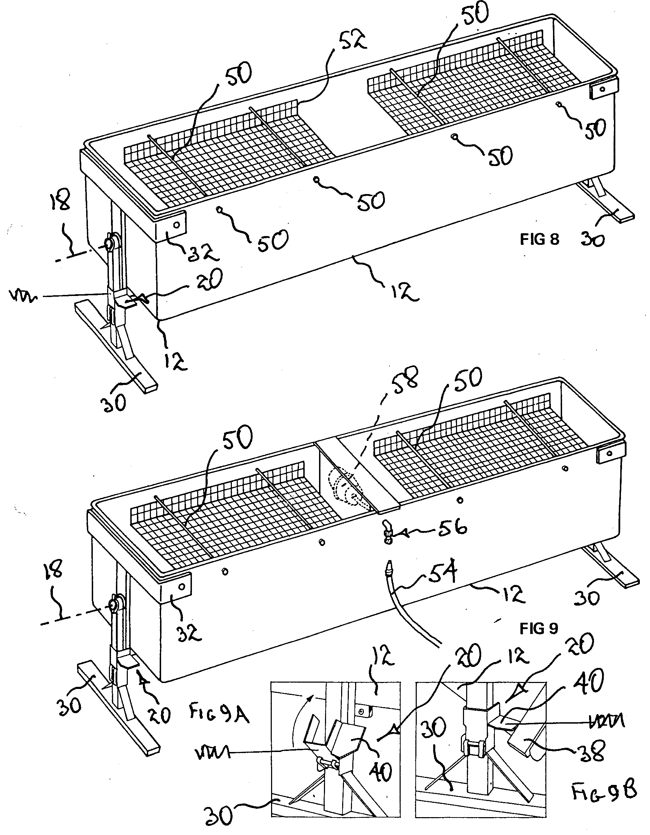

The tipping facility for tank 12, likewise provides means to remove soaked hay from the tank, as shown Figure 7.

Hay-retaining member 16, as shown in Figure 4 comprises grid or mesh material 22 mounted between lengthwise-extending edge boards 24 adapted to be lodged within tank 12 so as to be retained by an inwardly-projecting peripheral flange on the tank so as to retain the hay in the tank during soaking operations and thereby hold the hay in a fully immersed condition. By virtue of the interaction of boards 24 with the edge flange 26 of the tank, the hay-retaining member 16 can be removed to permit removal of the hay, as shown in Figure 7. Hay- retaining member 16 is fixed in its hay-retaining position by means of wedges 28 shown in Figure 4.

Other parts shown in Figures 1 to 4 include ground support brackets 30, and tank brackets 32 having projecting pivot pins 34 defining tipping axis 18. Latch assembly 20 comprises a pivotable latching member 36 which co-operates in the Figure 1 position of the tank with a lower portion 38 of tank bracket 32 and has a foot-operable flange 40. The arrangement is the same at both ends of the tank. A tie bar 42 interconnects the pivoting and latching at opposite ends of the tank.

The inner end of filler and drain cock 14 is covered by a channel section strainer 44 to protect the port into the tank from blockage by hay and the like.

Foot-operable flange 40 of latching member 36 has a secondary function. After release of lower portion 38 of tank brackets 32 to permit the tank to tip, the flange then serves to limit the tipping movement of the tank about axis 18, so that the tank does not execute a full 180° of movement, thereby reducing the likelihood that the tank will become jammed against a body of hay which has been tipped. This function of flange 40 is shown in Figure 7 and in Figure 9B.

Figure 5 shows the apparatus in use with bales 46 of hay within tank 12 and undergoing soaking therein. The hay is retained by hay-retaining member 16 in its fully immersed position. Wedges 28 act between the lengthwise-extending elements of grid material 22 and edge boards 24, which are only loosely fixed to the grid material, so as to urge outwards the edge boards so that these are firmly located under edge flanges 26.

The hay soaking apparatus 10 is shown with hay-receiving boards 48 positioned between the ground support brackets 30 to receive the bales of hay 46 after soaking and to allow same to continue draining.

Figures 8 and 9 show an alternative system for holding hay-retaining member 16 in relation to tank 12, namely removable locating rods 50 which are insertable through tank 12 and readily removed when needed for permitting the mass of hay to be tipped out. It will be noted that in the embodiment of Figures 8 and 9, the hay-retaining member has the grid material 22 formed with upturned edge flanges 52 to co-operate with rods 50.

Figure 9 also shows a modified water inlet arrangement comprising a quick-attach and detach water supply pipe or hose 54 connectable to a union 56 coupled to an inlet control valve 58 which controls the inlet of water and achieves a standard level of fill within tank 12 without supervision. Union 56 permits hose 54 to be rapidly detached for tipping purposes.

Operation of the apparatus will now be described.

Bales or nets of hay are placed in tank 12. The hay-retaining grid 22 is placed on top of the hay and lodged in position in relation to flanges 26 using wedges 28. The tank is then filled with water through filling valve 14. The hay-retaining member 16 holds the hay down so that it does not float up, and as a result it is fully immersed in the water.

After soaking is complete, the process for removal of the hay is as follows.

First, the water is drained from the tank by opening valve 14 and allowing draining to proceed. When draining is complete or is at least partially complete, tipping of the tank can be effected in order to continue with the process of removal of water from the hay. If the tank has not been fully drained in the upright position, then initially the remaining free water is tipped out. Then, with the tank in the position shown in Figure 6, draining continues as surplus water emerges from the nets of hay 46. When it is judged that a sufficient amount of draining has occurred, the hay-retaining grid 22 is removed by removing wedges 28 and disengaging boards 24 from the flanges 26 of the tank 12. This condition is shown in Figure 7. As Figure 7 clearly shows, the nets of hay, heavy as they are, can be readily removed from the tank merely by the tipping operation so that no significant lifting of them at all is required.

A significant feature of the method and apparatus is that there is provided means for discharging the treatment fluid before removal of hay from the tank. This will generally be carried out by a two-stage process consisting of initial use of the drain cock and subsequent tipping and draining of the remaining water before removal of the hay-retaining grid. The latter has a dual function, serving to retain the hay not only when it tends to float up and thus not to be effectively treated by the fluid, and also to retain the hay when the tank is tipped and draining of the mass of hay is required. Thus, it will be understood, this latter function is related to the provision of the facility to tip the tank and its contents.

The function of tipping the tank thus has significance not only in relation to draining the hay, but also in relation to enabling its removal from the tank without the use of lifting gear. By arranging matters so that the hay is deposited on a support surface which will permit the hay to continue to drain, the apparatus can then continue to be used for a further hay soaking operation, while natural drying of the treated hay continues.

It can now been seen that the method and apparatus of the invention offers significant operational and equipment simplicity advantages.

In terms of operation, the method is extremely simple and requires a minimum of supervision and manual intervention. No lifting gear is needed for the heavy masses of treated hay or the like. All operations are carried out conveniently in or adjacent the tank without subjecting operating personnel to any unacceptable lifting tasks. Moreover, the equipment involved is of considerable simplicity, using components which are of familiar construction in agricultural operations and deriving its hay soaking function principally from the provision of the features of the pivotability of the tank, the facility in the tank for retaining the hay, and the ability to fill and drain the tank in a convenient manner and preferably unsupervised.

Amongst modifications which could be made in the above embodiments while remaining within the scope of the invention, we mention the following. The tank itself can of course be of a variety of sizes and forms. Likewise, the facility for retaining the hay during soaking and during draining can vary considerably. An open-work construction is preferable, but not essential. Considerable variation in the manner of locating the retaining means in relation to the tank can be envisaged. It may be removable or hinged. A variety of means may be provided for locating the retaining means in its hay-retaining position.

Various arrangements for filling and emptying the tank can be envisaged including the separation of the filling and draining fuctions, filling from above etc. The latter would permit filling from a position at which disconnection of the filling pipe prior to tipping would not be needed.

## Claims

1. Apparatus adapted for use in soaking hay and the like comprising:-
a) a tank (12) to receive a body of hay;
b) said tank (12) being adapted to receive water or other treatment fluid to effect soaking;
c) a hay retaining member (16) mounted in relation to said tank (12) and positionable in relation to the tank (12) and fluid when contained therein so as to be capable of holding a body of hay more fully immersed in said fluid than it would be otherwise; characterised by:
d) hay removal means comprising pivot means (18) to permit tipping of said tank (12).

2. Apparatus according to claim 1, characterised by means (14) adapted to discharge at least some of said treatment fluid before said tank (12) is tipped.

3. Apparatus according to any one of the preceding claims, characterised by said hay retaining member (16) comprising a grid or mesh or the like member.

4. Apparatus according to claim 3, characterised by said hay-retaining member being mounted in relation to said tank (12) so as to be removable therefrom or movable to a non hay-retaining position.

5. A method of soaking hay or the like; said method comprising retaining a body of hay in soaking relationship with a body of water in a tank (12) by locating the body of hay below a hay retaining member (16), or in a defined working relationship thereto, whereby the body of hay is more fully immersed during soaking; characterised by the step of tipping said tank (12) after treatment of hay therein to enable the body of treated hay to be removed without significant lifting thereof.

6. A method according to claim 5, characterised by the step of discharging treatment fluid from said tank before tipping thereof.

## Patentansprüche

1. Vorrichtung zur Verwendung beim Weichen von Heu und dergleichen, die folgendes umfaßt:
a) einen Tank (12) zur Aufnahme einer Heumenge;
b) wobei der Tank (12) zur Aufnahme von Wasser oder einer anderen Behandlungsflüssigkeit zur Bewirkung des Weichens ausgeführt ist;
c) ein Heufesthalteglied (16), das derart bezüglich des Tanks (12) angebracht ist und derart bezüglich des Tanks (12) und der Flüssigkeit, wenn diese darin enthalten ist, positioniert werden kann, daß es eine Heumenge tiefer in der Flüssigkeit eingetaucht halten kann, als es sonst der Fall wäre; gekennzeichnet durch
d) ein Heuentnahmemittel, das ein Schwenkmittel (18) zum Gestatten eines Kippens des Tanks (12) umfaßt.

2. Vorrichtung nach Anspruch 1, gekennzeichnet durch ein Mittel (14), das zur Abführung mindestens eines Teils der Behandlungsflüssigkeit vor dem Kippen des Tanks (12) ausgeführt ist.

3. Vorrichtung nach einem der vorhergehenden Ansprüche, dadurch gekennzeichnet, daß das Heufesthalteglied (16) ein Gitter oder ein Sieb oder ein ähnliches Glied umfaßt.

4. Vorrichtung nach Anspruch 3, dadurch gekennzeichnet, daß das Heufesthalteglied bezüglich des Tanks (12) so angebracht ist, daß es davon abgenommen oder in eine Nicht-Heufesthalteposition bewegt werden kann.

5. Verfahren zum Weichen von Heu oder dergleichen, bei dem man eine Heumenge in einer Weich-Beziehung mit einer Wassermenge in einem Tank (12) festhält, indem die Heumenge unter einem Heufesthalteglied (16) oder in einer definierten Arbeitsbeziehung dazu angeordnet wird, wodurch die Heumenge beim Weichen tiefer eingetaucht wird, gekennzeichnet durch den Schritt des Kippens des Tanks (12) nach der Behandlung von darin enthaltenem Heu, damit die Menge des behandelten Heus entfernt werden kann, ohne wesentlich angehoben zu werden.

6. Verfahren nach Anspruch 5, gekennzeichnet durch den Schritt des Abführens von Behandlungsflüssigkeit aus dem Tank vor seinem Kippen.

## Revendications

1. Appareil adapté pour l'utilisation dans le trempage du foin et similaire, comprenant:
a) une cuve (12) pour recevoir un volume de foin;
b) ladite cuve (12) étant adaptée pour recevoir de l'eau ou un autre fluide de traitement pour effectuer le trempage;
c) un organe de rétention du foin (16) monté par rapport à ladite cuve (12) et susceptible d'être positionné par rapport à la cuve (12) et au fluide lorsqu'il est contenu dans celle-ci de manière à être capable de retenir un volume de foin immergé plus complètement dans ledit fluide qu'il ne le serait autrement; caractérisé par:
d) un moyen de retrait du foin comprenant un moyen de pivot (18) permettant le basculement de ladite cuve (12).

2. Appareil selon la revendication 1, caractérisé par un moyen (14) adapté pour décharger au moins une partie dudit fluide de traitement avant de faire basculer ladite cuve (12).

3. Appareil selon l'une quelconque des revendications précédentes, caractérisé par le fait que ledit organe de rétention du foin (16) comprend une grille ou un grillage ou un organe similaire.

4. Appareil selon la revendication 3, caractérisé par le fait que ledit organe de rétention du foin est monté par rapport à ladite cuve (12) de manière à pouvoir en être écarté ou déplacé dans une position ne retenant pas le foin.

5. Procédé de trempage du foin ou similaire, ledit procédé comprenant la rétention d'un volume de foin en relation de trempage avec un volume d'eau dans une cuve (12) en plaçant le volume de foin sous un organe de rétention du foin (16), ou dans une relation de travail définie par rapport à celui-ci, le volume de foin étant immergé plus complètement au cours du trempage; caractérisé par l'étape consistant à faire basculer ladite cuve (12) après le traitement du foin dans celle-ci pour permettre au volume de foin traité d'être retiré sans effort de levage considérable de celui-ci.

6. Procédé selon la revendication 5, caractérisé par l'étape consistant à décharger le fluide de traitement depuis ladite cuve avant de la faire basculer.
